# EUROPÄISCHE PATENTANMELDUNG

(11) **EP 1 982 815 A1**
(43) Veröffentlichungstag der Anmeldung: **22.10.2008**
(21) Anmeldenummer: 08102618.9
(22) Anmeldetag: 14.03.2008
(51) Int. Cl.: B29B 17/00

(54) **Schmelzverdichter**

(30) Priorität: 16.03.2007 DE 102007013278
(71) Anmelder: Josef Keller GmbH, 51491 Overath-Imme (DE)
(72) Erfinder: Keller, Josef, 51429 Bergisch Gladbach (DE)
(74) Vertreter: Kayser, Martin

(57) **Zusammenfassung**

Die Erfindung betrifft eine Vorrichtung (20) zum Verkleinern und Aufschmelzen von Schaumstoffteilen mit einer Einwurföffnung (24), einer Fördervorrichtung, einer Zerkleinerungsvorrichtung, einer Pressvorrichtung, einer Aufschmelzvorrichtung und einer Austrittsöffnung für aufgeschmolzenes Material. Die Fördervorrichtung und die Zerkleinerungsvorrichtung sind als nur eine Förder-Zerkleinerungsvorrichtung ausgeführt, in der die Schaumstoffteile während des Transports zerkleinert werden.

## Beschreibung

Die vorliegende Erfindung betrifft eine Vorrichtung zum Zerkleinern und Aufschmelzen von Schaumstoffteilen, mit
- einer Einwurföffnung für die Schaumstoffteile,
- einer Fördervorrichtung,
- einer Zerkleinerungsvorrichtung,
- einer Pressvorrichtung,
- einer Aufschmelzvorrichtung,
- einer Austrittsöffnung für aufgeschmolzenes Material.
Schaumstoffprodukte fallen insbesondere als Verpackungsmaterial für Elektronikgeräte, beispielsweise Fernseher, Kühlschränke oder Musikanlagen an. Der wesentliche Vorteil, dieses Materials, nämlich dass er bei sehr großem Volumen nur eine sehr geringe Masse aufweist, ist gleichzeitig ein wesentlicher Nachteil bei der Entsorgung eines solchen Materials. Gerade bei größeren Elektronikhändlern fallen sehr große Volumen an Verpackungsmaterial an.

Der Begriff Schaumstoff bezieht sich in diesem Zusammenhang auf sämtliche weichen und harten Schaumstoffprodukte, z.B. Styropor@ sowie Restmaterial, das bei der Verarbeitung von polysterolhaltigen Produkten als Reststücke oder Schüttgut anfällt.

Aufgrund erhöhter Anforderungen an den Umweltschutz ist es üblich, möglichst sämtliche alltäglichen Gegenstände, wie Kunststoffflaschen, eisernes Material, Papier oder dergleichen nach dem Gebrauch wiederzuverwerten. Entsprechend werden auch die genannten Schaumstoffmaterialien nach der ersten Verwendung üblicherweise einer Wiederverwertung zugeführt. Aufgrund des großen Volumens des Schaumstoffmaterials ist es üblich, derartige Materialien vor einem Transport zu einer Wiederverwertungsanlage zu zerkleinern. Dies kann entweder manuell erfolgen, was erheblichen körperlichen Einsatz verlangt, oder es können mechanische Zerkleinerungsmaschinen zur Hilfe genommen werden.

In den letzten Jahren hat sich insbesondere die Verflüssigung von Schaumstoffteilen als Möglichkeit zur maximalen Volumenverkleinerung durchgesetzt. Beispielsweise beschreibt die DE 101 63 091 A1 eine Vorrichtung, die zerkleinerten, thermoplastischen Schaum, einer Wärmeeinwirkung aussetzt. Diese kann beispielsweise durch Infrarotstrahlung, durch beheizte Platten bzw. Walzen oder Heißluft erfolgen. Das geschmolzene Material wird mit Hilfe einer Walkvorrichtung einem beheizten Entgasungsextruder zugeführt, wo es weiter verdichtet und anschließend granuliert wird. Diese Vorrichtung benötigt relativ viel Energie und die Förderung des bereits geschmolzenen Materials in der Vorrichtung führt zu Problemen durch Anhaftungen an den Förderschnecken.

Die DE 20 2005 020 234 U1 beschreibt dagegen ein Verfahren, bei dem Abfälle aus Styropor® mit Hilfe zweier parallel zueinander verlaufender Zerkleinerungsstangen zunächst zerkleinert wird. Das zerkleinerte Material wird anschließend über eine Spiralstange einem Heizrohr zugeführt, in dem wiederum eine Spiralstange angeordnet ist, und in der das Styropor® aufgeschmolzen wird. Anschließend wird das aufgeschmolzene und verdichtete Styropor® aus dem Heizrohr herausgedrückt und in gewünschte Längenabschnitte zerteilt. Diese Vorrichtung baut aufgrund der hohen Anzahl an Bauteilen sehr groß. Die Herstellung und die Wartung sind mit entsprechendem Aufwand und Kosten verbunden.

Eine ähnlich große und aufwendig konstruierte Vorrichtung beschreibt die DE 91 09 781.9. Auch die darin beschriebene Vorrichtung eignet sich zum Zerkleinern und Aufschmelzen von Schaumstoffteilen bzw. Styropor®. Die Vorrichtung ist aber etwa 7 Meter lang und 2,2 m breit, was für viele Einsatzgebiete zu groß ist. Insbesondere eignet sich die Vorrichtung deshalb nicht zu einem Transport an Einsatzorte an, denen bei denen große Mengen an Schaumstoffteilen anfallen.

Alle genannten Vorrichtungen haben auch den Nachteil, dass keine optimale Einwurfhandhabung in Bezug auf die Durchsatzmenge, insbesondere dem schnellen und selbständigen Einzug nach dem Einwurf, aufweisen. Ein wirtschaftlicher Einsatz ist wegen des großen Platzbedarfs und dem hohen Energieaufwand in der Regel nicht gegeben.

Die Aufgabe der vorliegenden Erfindung besteht darin, eine gattungsgemäße Vorrichtung zum Zerkleinern und Aufschmelzen von Schaumstoffteilen zu schaffen, die möglichst geringe Abmessungen aufweist. Sie soll möglichst einfach konstruiert sein und entsprechend kostengünstig herzustellen und zu warten sein.

Erfindungsgemäß wird die Aufgabe durch eine Vorrichtung zum Zerkleinern und Aufschmelzen von Schaumstoff teilen mit einer Einwurföffnung für die Schaumstoffteile, einer Fördervorrichtung, einer Zerkleinerungsvorrichtung, einer Pressvorrichtung, einer Aufschmelzvorrichtung, und einer Austrittsöffnung für aufgeschmolzenes Material gelöst, bei der die Fördervorrichtung und die Zerkleinerungsvorrichtung als nur eine Förder-Zerkleinerungsvorrichtung ausgeführt sind, in der die Schaumstoff teile während der Förderung zerkleinert werden.

Dadurch, dass die eingeworfenen Schaumstoff teile sofort eingezogen, gefördert und gleichzeitig zerkleinert werden, baut die erfindungsgemäße Vorrichtung sehr klein, da die Arbeitsgänge übereinander und gleichzeitig stattfinden.

In einer vorteilhaften Ausführungsvariante erfolgt die Bedienung der Anlage - wie auch der Einwurf und die Produktentnahme - an nur einer Kopfseite, wodurch ein Platz sparender Standort gewählt werden kann. Vorteilhafterweise fallen die Schaumstoff teile unmittelbar auf mindestens eine Einzugs-Schneckenwendel, die auf ihrer Außenseite Sägezähne aufweist. Diese Einzugs-Schneckenwendel fördert das Material in Richtung derjenigen Kopfseite, an der die Schaumstoffteile eingeworfen wurden. Während der Förderung werden die Schaumstoffteile aufgrund der Sägezähne und auch durch die auf der Einzugs-Schneckenwendel sitzenden Wendel zerkleinert.

Die zerkleinerten Schaumstoffteile werden einer Pressschnecke zugeführt, die sich in Richtung einer Heizvorrichtung konisch verjüngt. Durch den sich verringernden Durchmesser der Pressschnecke werden die zerkleinerten Schaumstoffteile bereits verdichtet. Vorteilhafterweise erfolgt dabei der Pressvorgang in einer temperaturgeregelten Pressylindereinheit, die außerhalb eines Zerkleinerungsgehäuses, in dem sich die Förder-Zerkleinerungsvorrichtung befindet, angeordnet ist. Die Pressschnecke verringert auf der konischen Zylinderlänge das Volumenmaterial um etwa 60 %, wobei die plastisch veränderten Schaumstoff teile gleichzeitig entgasen.

Es hat sich gezeigt, dass es besonders vorteilhaft ist, wenn die zerkleinerten Schaumstoff teile in der Pressschnecke bereits erwärmt werden. Die vorgewärmten zerkleinerten Schaumstoffteile werden einem Düsenkopf mit Lochscheibe zugeführt, der je nach Aufschmelztemperatur eine weitere Verdichtung von bis zu 90% ermöglicht. Der Düsenkopf hat seine Ausgangsöffnung vorteilhafterweise unterhalb der Einwurföffnung, also auf der gleichen Kopfseite der Vorrichtung. Somit kann ein Benutzer Schaumstoffteile durch die Einwurföffnung in die Vorrichtung hineinwerfen und anschließend an gleicher Stelle das aufgeschmolzene Material entnehmen.

Erfindungsgemäß sind der Düsenkopf und die Presszylindereinheit, also ein Presszylindergehäuse in dem sich eine Pressschnecke befindet, thermisch möglichst gut voneinander getrennt. Dies kann durch eine oder mehrere Dichtungen, beispielsweise aus Teflon erfolgen. Dadurch ist eine sehr genaue Einstellung der Aufschmelztemperatur möglich. Unabhängig davon kann die Presszylindereinheit beispielsweise mit Hilfe einer dieser umgebenden Bandheizung erwärmt werden, so dass das zerkleinerte Schaumstoffmaterial bereits vorgewärmt in den Düsenkopf eintritt.

Die erfindungsgemäße Vorrichtung kann problemlos mit Hilfe eines Stromgenerators betrieben werden. Es hat sich gezeigt, dass etwa 6 kW als Antriebsleistung ausreichen. Weiterhin können sämtliche Elemente der Vorrichtung auf etwa auf Fläche einer Europalette angeordnet werden, was einen problemlosen Transport der Vorrichtung möglich macht. Sammelstellen können somit angefahren werden und in kurzer Zeit große Volumen von Schaumstoffteilen und Reststücken bis etwa 90:1 verdichtet werden. Der Platz sparende Aufbau der Anlage auf einem Anhänger kann eine wirtschaftliche Lösung sein, um Schaumstoffteile bei Warenhäusern oder Gewerbebetrieben zu verarbeiten.

Die Einwurföffnung ist vorteilhafterweise in einer Höhe von etwa 1 bis 1,5 m angeordnet, um ein problemloses Einwerfen der Schaumstoffteile zu ermöglichen. Es hat sich gezeigt, dass sich die Schneckenwendeln vorteilhafterweise mit unterschiedlicher Drehzahl um ihre Längsachse drehen und ggf. auch unterschiedliche Durchmesser aufweisen. Die unterschiedlichen Drehzahlen und Durchmesser führen dazu, dass die Schaumstoffteile sehr wirkungsvoll und schnell zerkleinert werden. Weiterhin kann eine Andrückplatte oberhalb der Förder-Zerkleinerungsvorrichtung vorgesehen sein, die die Schaumstoffteile gegen die Schneckenwendeln drückt. Auch dies verbessert die Zerkleinerung und führt zu einer größeren Durchsatzmenge. Die Andrückplatte kann manuell von der bedienenden Person, aber auch automatisch bewegt werden. Beispielsweise eignen sich auch Gasfedern zur Unterstützung der Anpresskraft.

Die Vorrichtung weist ein Gehäuse auf, das sämtliche drehenden und sich bewegenden Teile umgibt und zur Geräuschminderung mit einem entsprechenden Material gekapselt sein kann. Um ein gefährliches Hineingreifen in die Vorrichtung durch die Einwurföffnung zu vermeiden, ist vorteilhafterweise eine sogenannte Zweihandbedienung vorgesehen. Dies bedeutet, dass die Vorrichtung nur dann arbeitet, wenn die bedienende Person mit beiden Händen ein Bedienelement betätigt.

Die Leistung und Durchsatzmenge der erfindungsgemäßen Vorrichtung kann insbesondere dadurch erhöht werden, dass die Förder- Zerkleinerungsvorrichtung durch zwei Schneckenwendeln, einer Einzugsschneckenwendel und einer Vortriebsschneckenwendel ausgebildet ist. Diese beiden Schneckenwendeln verlaufen in etwa parallel zueinander, wobei die Einzugsschneckenwendel in vertikaler Richtung etwas oberhalb der Vorschubsschneckenwendel angeordnet ist. Die Einzugsschneckenwendel ist in vertikaler Richtung vorzugsweise um 30° versetzt zur Vortriebsschneckenwendel angeordnet, so dass die Schaumstoffteile zwischen ihnen optimal zerkleinert werden können. Die beiden Schneckenwendeln weisen sozusagen einen Öffnungswinkel von 20° auf. Der unterschiedliche Abstand zwischen den beiden Schneckenwendeln führt dazu, dass die Schaumstoffteile zunächst grob und dann immer feiner zerkleinert werden können. Es hat sich als besonders vorteilhaft erwiesen, wenn der Winkelversatz bzw. Öffnungswinkel zwischen den beiden Schneckenwendeln einstellbar ist, diese also nicht auf 20° festgelegt sind. Eine Verstellung des Winkels zwischen den beiden Schneckenwendeln von 0 bis 50° ermöglicht die Zerkleinerung unterschiedlich großer Schaumstoffteile.
Zusätzlich zu den beiden genannten Schneckenwendeln kann ein Kegelfräser vorgesehen sein, der die Zerkleinerung und die Füllung der etwas unterhalb angeordneten Vertriebs- Schneckenwendel unterstützt. Die Spitze des Kegelfräsers weist dabei in die der Förderrichtung entgegen gesetzte Richtung, so dass die auf ihn zu bewegten Schaumstoffteile zunehmend verdichtet und in die Vertriebs-Schneckenwendel hineingepresst werden. Der Kegelfräser ist zwischen den beiden Schneckenwendeln angeordnet und ermöglicht eine höchstmögliche Füllung der Schneckenwendeln.

Die Aufschmelztemperatur kann sowohl in der Pressschnecke als auch im Düsenkopf an die geforderten Parameter des Endproduktes angepasst werden. Wesentlich ist, dass das aufgeschmolzene Schaumstoffmaterial Eigenschaften aufweist, die eine weitere Verwertung ermöglichen. Je nach Verwertungsprozess können diese unterschiedlich sein, so dass eine entsprechend angepasste Aufschmelzung sinnvoll ist. Eine Aufschmelztemperatur von 100 bis 220° C kann geeignet sein.

Die Entlüftung der Vorrichtung, also das Ableiten der austretenden Gase kann durch entsprechende Öffnungen im Gehäuse erfolgen, es ist aber auch eine Entlüftung durch Hohlwellen der Schneckenwendeln möglich.

Für eine besonders wirkungsvolle Zerkleinerung können auch die Innenwände des Gehäuses mit Zähnen oder Haken versehen sein.

Als zusätzliches erfindungsgemäßes Element kann eine Metallsuchvorrichtung integriert sein, um Metallteile möglichst vor dem Eintritt in die Schneckenwendeln, insbesondere vor dem Eintritt in die Pressschnecke detektieren und entnehmen zu können.

Die thermische Trennung des Düsenkopfes von der Presskammer kann durch entsprechend geeigneten Materialien beispielsweise Teflon erfolgen.

Anhand der nachfolgenden Figuren wird die Erfindung näher erläutert. Das gezeigte Ausführungsbeispiel soll dabei nicht einschränkend zu verstehen sein, vielmehr werden lediglich zwei besonders geeignete Vorrichtungen beschrieben. Es zeigen:
- Fig. 1:: eine erfindungsgemäße Vorrichtung in perspektivischer Darstellung,
- Fig. 2:: eine Prinzipdarstellung der erfindungsgemäßen Vorrichtung im Längsschnitt,
- Fig. 3:: eine Prinzipdarstellung einer zweiten Ausführungsvariante einer erfindungsgemäßen Vorrichtung im Längsschnitt,
- Fig. 4:: die erfindungsgemäße Vorrichtung aus Figur 3 im Querschnitt.
- Fig. 5:: Ausschnittsvergrößerung eines erfindungsgemäßen Düsenkopfs mit Presszylindereinheit,
- Fig. 6: Ausschnittsvergrößerung einer zweiten Ausführungsform eines erfindungsgemäßen Düsenkopfs mit Presszylindereinheit,
- Fig. 7: Ausschnittsvergrößerung einer dritten Ausführungsform eines erfindungsgemäßen Düsenkopfs mit Presszylindereinheit,
- Fig. 8:: eine zweite Ausführungsvariante der Vorrichtung im Längsschnitt,
- Fig. 9:: die Vorrichtung aus Figur 8 im Querschnitt gemäß Schnittlinie A-A,
- Fig. 10: Ausschnittvergrößerung einer vierten Ausführungsform eines erfindungsgemäßen Düsenkopfs im Längsschnitt.
- Fig. 11: die Vorrichtung aus Figur 8 in Vorderansicht mit Blick auf den Düsenkopf.

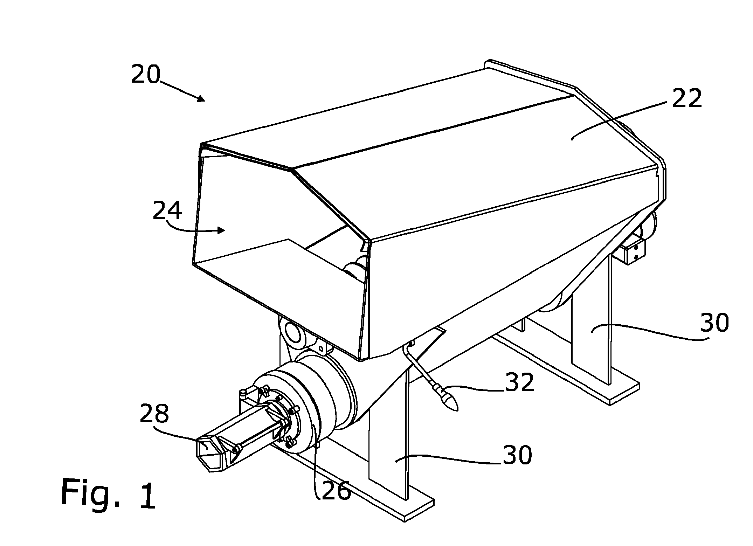

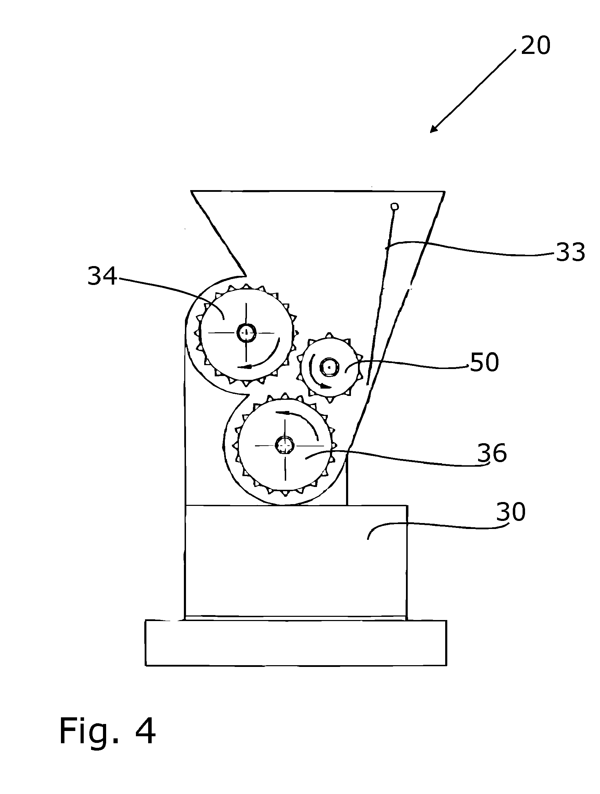

Wie insbesondere aus Figur 1 zu erkennen ist, weist die erfindungsgemäße Vorrichtung 20 ein Gehäuse 22 mit einer Einwurföffnung 24 auf. Unterhalb der Einwurföffnung 24, die an einer Kopfseite der Vorrichtung 20 angeordnet ist, ist ein Düsenkopf 26 mit einem Brikettierungszylinder 28 vorgesehen. Im gezeigten Ausführungsbeispiel weist die Vorrichtung weiterhin zwei Standfüße 30 auf. Weiterhin ist ein Bedienhebel 31 erkennbar, über den eine seitliche Andrückplatte 33 (vergl. Figur 4) bewegt werden kann.

Wie dargestellt, befinden sich die Einwurföffnung 24 und der Brikettierungszylinder 28 auf der gleichen Kopfseite der Vorrichtung 20, so dass die gesamte Vorrichtung Platz sparend beispielsweise in einer Ecke eines Gebäudes angeordnet sein kann. Die Einwurföffnung 24 weist vorzugsweise eine Größe von etwa 0,3 bis 1 m² auf, es hat sich gezeigt, dass eine für den Alltag gebräuchliche Einwurföffnung 24 etwa 500 mm hoch und 800 mm breit sein kann.

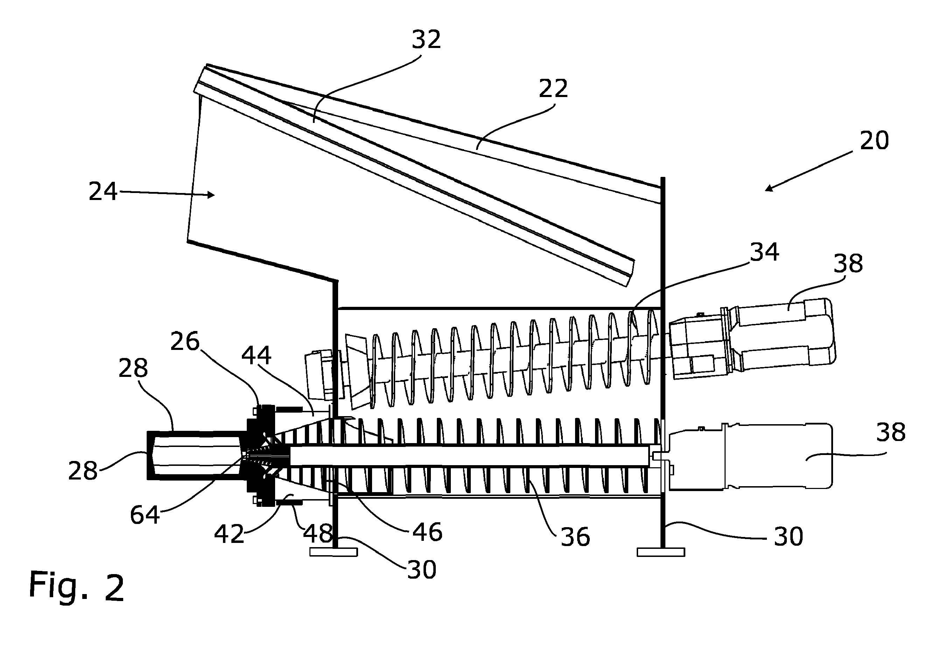

Figur 2 verdeutlicht den Aufbau im Inneren der Vorrichtung 20. Nicht gezeigte Schaumstoffteile werden durch die Einwurföffnung 24 in das Gehäuse 22 hineingeworfen. Vorzugsweise ist eine Andrückplatte 32 vorgesehen, die die Schaumstoffteile auf eine Förder-Zerkleinerungsvorrichtung, im vorliegenden Ausführungsbeispiel bestehend aus einer Einzugsschneckenwendel 34 und einer Vortriebsschneckenwendel 36. Die Einzugsschneckenwendel 34 ist in vertikaler Richtung oberhalb der Vortriebsschneckenwendel 36 angeordnet. Die Förder-Zerkleinerungs-Vorrichtung besteht also im gezeigten Ausführungsbeispiel aus zwei Schneckenwendeln, grundsätzlich würde aber auch nur eine Schneckenwendel genügen, die die Schaumstoffteile in Richtung des Düsenkopfes 26 transportiert und dabei zerkleinert. Die Zerkleinerung wird durch Sägezähne oder Haken verbessert, die außen an den Schneckenwendeln 34, 36 angeordnet sind. Beide Schneckenwendeln 34, 36 werden im gezeigten Ausführungsbeispiel durch Elektromotoren 38 angetrieben.

Die Einzugsschneckenwendel 34 und die Vortriebsschneckenwendel 36 sind in vertikaler Richtung versetzt zueinander angeordnet, so dass Schaumstoffteile zwischen die beiden Schneckenwendeln 34, 36 gedrückt werden können. Dies verdeutlicht auch Figur 4, allerdings für ein anderes Ausführungsbeispiel. Wesentlich ist auch, dass die beiden Schneckenwendeln 34, 36 nicht, wie in Figur 2 gezeigt stets exakt parallel zueinander verlaufen, sondern auch geneigt zueinander angeordnet sein können. Dies bedeutet, dass beispielsweise die Einzugsschneckenwendel 34 auf Seiten des Elektromotors 38 nach oben oder unten schwenkbar ausgeführt ist. Dadurch verbreitet sich der Abstand zwischen den beiden Schneckenwendeln 34, 36, was zu einer besseren Zerkleinerung unterschiedlich großer Schaumstoffteile führt. Die Schneckenwendeln 34, 36 können den gleichen oder unterschiedliche Durchmesser aufweisen, insbesondere können sie auch mit unterschiedlichen Drehzahlen betrieben werden, wodurch die Zerkleinerung der Schaumstoffteile weiter verbessert wird.

Die durch die Förder-Zerkleinerungsvorrichtung zerkleinerten Schaumstoffteile werden insbesondere über die Vortriebsschneckenwendel 36 einer Presszylindereinheit 42 zugeführt, die in Förderrichtung vor dem Düsenkopf 26 angeordnet ist. Die Presszylindereinheit 42 weist ein Presszylindergehäuse 44 mit einer darin angeordneten Pressschnecke 46 auf. Die Pressschnecke 46 verjüngt sich in Richtung des Düsenkopfs 26, wodurch das darin befindliche Schaumstoffmaterial verdichtet wird. Die Presszylindereinheit 42 wird vorzugsweise durch eine Heizvorrichtung erwärmt, im gezeigten Ausführungsbeispiel durch eine Bandheizung 48, die das Presszylindergehäuse 44 zumindest bereichsweise umgibt. Das verdichtete, zum Teil entgaste und vorgewärmte Schaumstoffmaterial tritt aus der Pressschnecke 46 in den Düsenkopf 26 ein, wo es vollständig aufgeschmolzen wird.

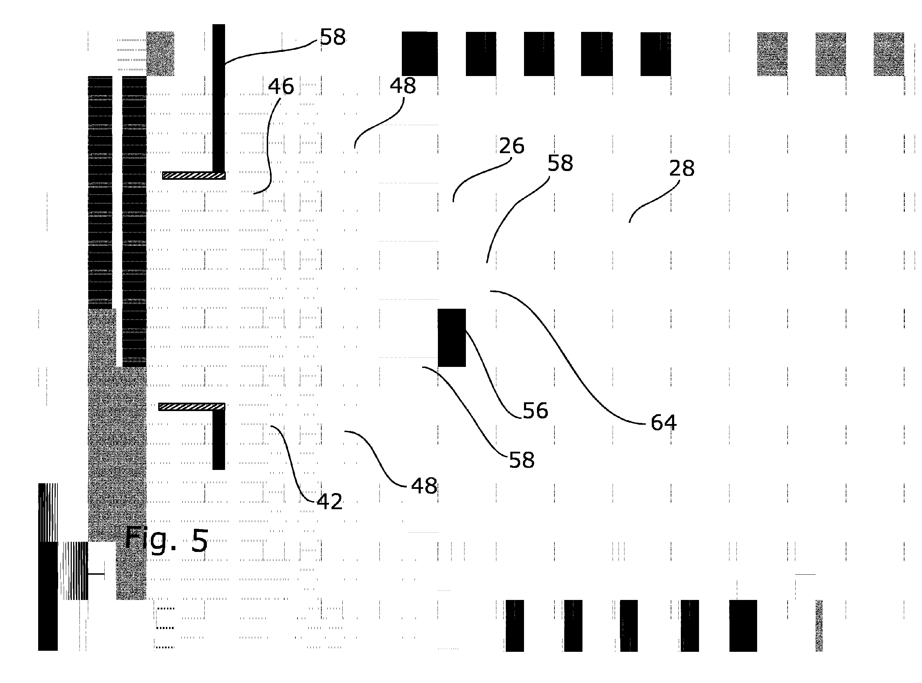

Es hat sich als vorteilhaft erwiesen, wenn der Düsenkopf 26 und die Presszylindereinheit 42 möglichst effektiv thermisch voneinander getrennt sind. Dies kann vorzugsweise dadurch erreicht werden, dass sich zwischen dem Düsenkopf 26 und der Presszylindereinheit 42 Materialien befinden, die eine möglichst geringe Wärmeleitung aufweisen (vergl. Fig. 5).

An den Düsenkopf 26 schließt sich der Brikettierungszylinder 28 an, der zähflüssiges Schaumstoffmaterial in Brikettsformat, die dann unten aus dem Brikettierungszylinder 28 herausfallen. Das zähflüssige Schaumstoffmaterial wird zu diesem Zweck in den Brikettierungszylinder gedrückt und erkaltet dort. Während eine nicht gezeigte Ausgabeöffnung geöffnet wird, stoppt die Vorrichtung 20.

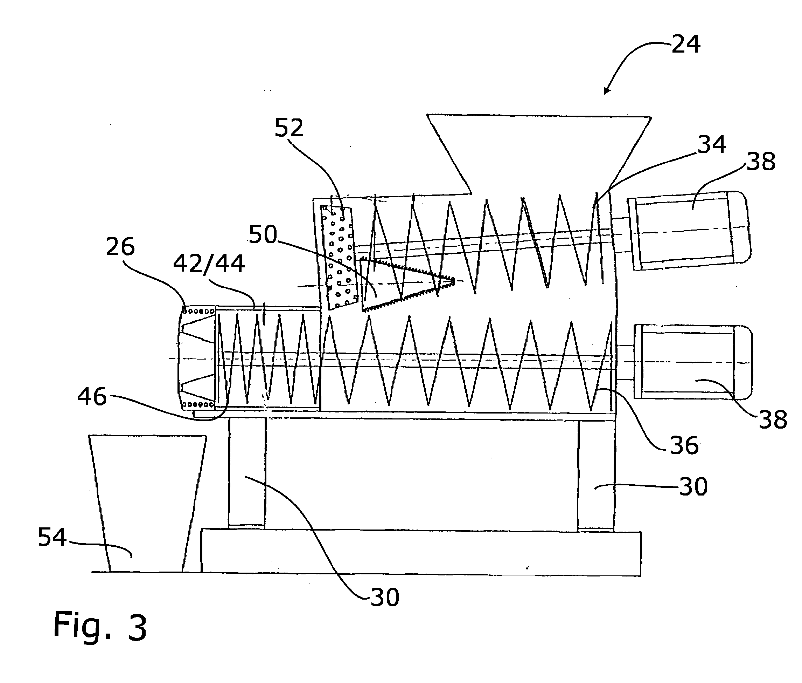

Figur 3 und Figur 4 zeigen eine weitere Ausführungsvariante der erfindungsgemäßen Vorrichtung 20, die im Wesentlichen die gleichen Bauteile aufweist, die entsprechend mit den gleichen Referenznummern versehen sind. Ein wesentlicher Unterschied zur ersten Variante besteht darin, dass die Einwurföffnung 24 nicht kopfseitig, sondern nach oben geöffnet angeordnet ist. Die Schaumstoffteile werden also in die Einwurföffnung 24 geworfen und fallen dann automatisch auf die Einzugsschneckenwendel 34. Weiterhin ist ein Kegelfräser 50 vorgesehen, der dem Zerkleinerungs- und Verdichtungsvorgang unterstützt. Ebenfalls unterstützend wirkt eine Frässcheibe 52, die in Förderrichtung am Ende der Einzugsschneckenwendel 34 angeordnet ist und das Schaumstoffmaterial in möglichst kleine Teile fräst. Der Kegelfräser 50 ist ebenfalls in Förderrichtung endseitig im Bereich der Einzugsschneckenwendel 34 angeordnet und verjüngt sich in die der Förderrichtung entgegengesetzte Richtung. Somit wird das auf dem Kegelfräser 50 transportierte Schaumstoffmaterial zunehmend gegen die Einzugsschneckenwendel 34 und/oder die Vortriebsschneckenwendel 36 gepresst. Das zerkleinerte Schaumstoffmaterial gelangt ebenfalls über die Pressschnecke 46 in den Düsenkopf 26 und fällt von dort in einen Sammelbehälter 54.

Eine seitliche Andrückplatte 33 drückt bei dieser Ausführungsvariante die Schaumstoffteile nicht von oben auf die Förder-Zerkleinerungsvorrichtung, sondern von der Seite gegen diese.

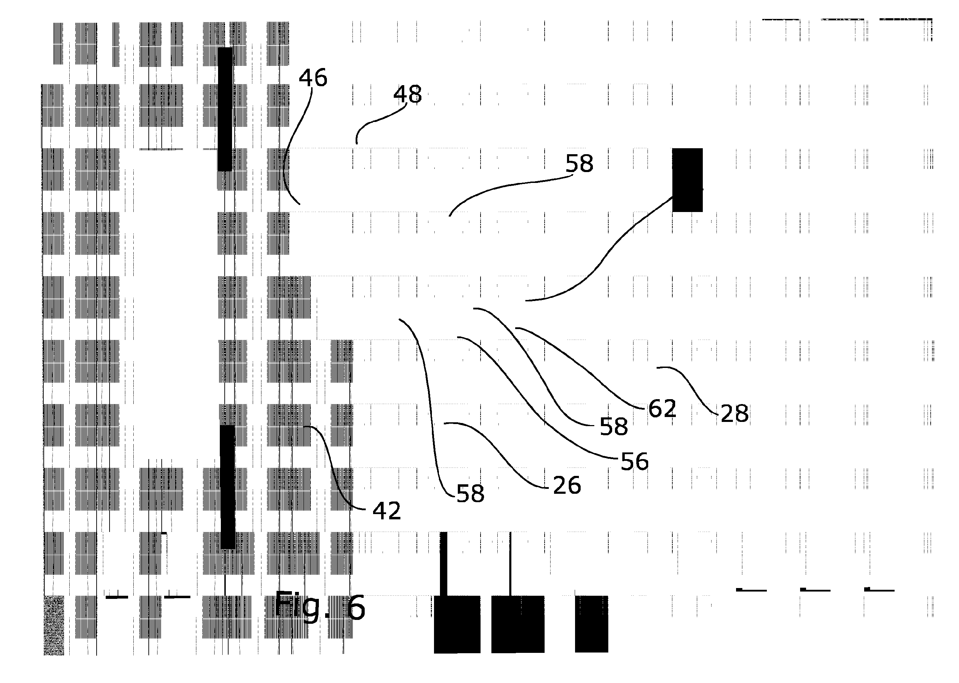

Es wird explizit darauf hingewiesen, dass unterschiedliche Elemente zwischen den beiden Ausführungsvarianten austauschbar sind. Dies bedeutet, dass beispielsweise der Kegelfräser 50 und die Frässcheibe 52 auch in der ersten Ausführungsvariante Verwendung finden können. Auch kann der Brikettierungszylinder 28 der Ausführungsvariante gemäß Figur 4 bei beiden Varianten vorgesehen sein. Grundsätzlich ist es möglich, über die Temperatur der Aufschmelzung das Endprodukt zu bestimmen. Wird die Temperatur beispielsweise sehr hoch gewählt, kann das aufgeschmolzene Material in Kokillen abgefüllt werden, ist die Temperatur niedriger, kann es als Granulat in den Sammelbehälter 54 gefüllt werden oder in die Form von Briketts, Zylindern oder ähnliches gepresst werden (vgl. Fig. 5 und 6). Die Form des Endproduktes ist beliebig und kann den Bedürfnissen des Abnehmers angepasst werden.

Figur 5 verdeutlicht den Aufbau einer ersten erfindungsgemäßen Presszylindereinheit 42 mit sich anschließendem Düsenkopf 26. Das zerkleinerte und bereits vorerwärmte Material wird in Austrittskanäle 56 gedrückt, die in Förderrichtung schräg durch den Düsenkopf 26 verlaufen. Der Düsenkopf 26 kann ebenfalls durch eine Bandheizung 48 beheizt werden, es bieten sich aber auch andere Heizvorrichtungen an. Der Düsenkopf 26 ist über mehrere Isolationen 58 aus einem thermisch gering leitenden Material, beispielsweise Teflon, thermisch möglichst gut von der Presszylindereinheit 42 getrennt. Durch diese Trennung kann eine sehr differenzierte und genaue Wärmezufuhr erfolgen, die für das Endprodukt maßgeblich ist. Weiterhin sind einer oder mehrere nicht dargestellte Entlüftungskanäle vorgesehen, über den oder die aus dem verdichteten und aufgeschmolzenen Material austretende Gase entlüftet werden können. Das geschmolzene und verdichtete Material wird in den Brikettierungszylinder 28 gedrückt. Die Entlüftungskanäle können beispielsweise in die Isolationen eingearbeitet sein.

Figur 6 zeigt eine alternative Ausführungsform der Presszylindereinheit 42 und des Düsenkopfes 26. Diese ist insbesondere dann geeignet, wenn das aufgeschmolzene Material nicht dünnflüssig, sondern dickflüssig oder pastös ist. Dies kann zum einen durch das Material selbst begründet sein, es kann bei gleichem Material aber auch von der Aufschmelztemperatur abhängig sein. Um eine höchstmögliche Verdichtung zu erreichen, wird das aufgeschmolzene Material durch die Austrittskanäle 56 nochmals einer Verdichtungsschnecke 62 zugeführt. Diese kann vorteilhafterweise auch aus Teflon gefertigt sein und ein Sägegewinde bzw. ein einseitiges Druckgewinde aufweisen. Die Verdichtungsschnecke 62 verjüngt sich in Richtung des Brikettierungszylinders 28, genauso wie das die Verdichtungsschnecke 62 umgebende Gehäuse. Das aufgeschmolzene Material wird somit in Förderrichtung verdichtet.

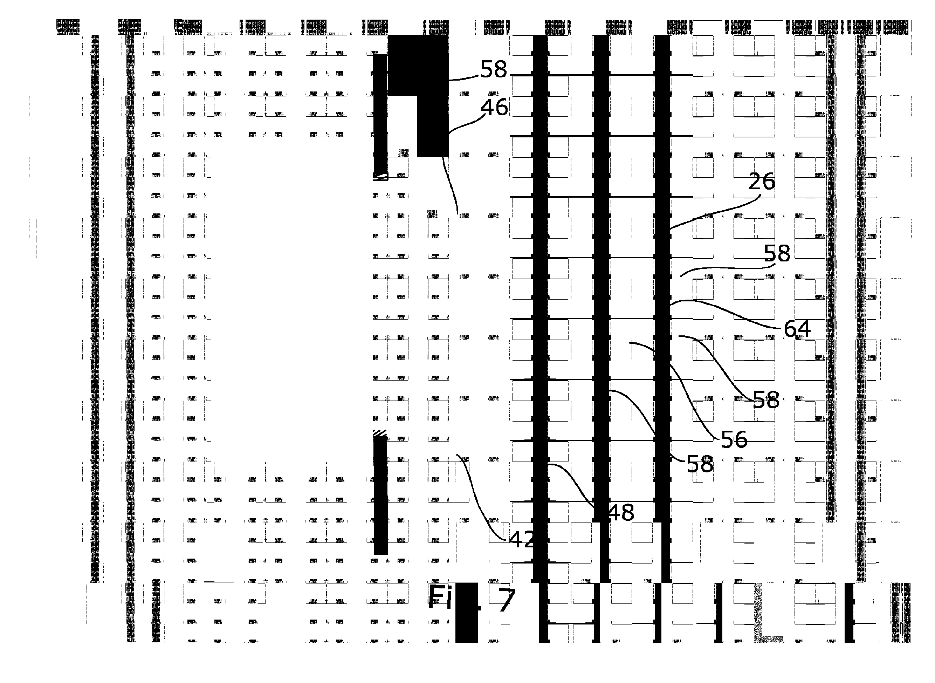

Die Ausführungsform gemäß Figur 7 ist insbesondere für die Abfüllung von verdichtetem Material in Kokillen vorgesehen. Dementsprechend ist kein Brikettierungszylinder 28 vorgesehen. Der gezeigte Düsenkopf 26 entspricht ansonsten dem Düsenkopf 26 aus Figur 5. Um eine möglichst effektive und saubere Abfüllung in Kokillen zu bewerkstelligen, kann an eine Austrittsdüse 64, durch die bei den Ausführungsvarianten gemäß gemäß Fig. 5 und 6 das Material in den Brikettierungszylinder 28 gefördert wird, eine entsprechend geeignete Vorrichtung angebracht werden.

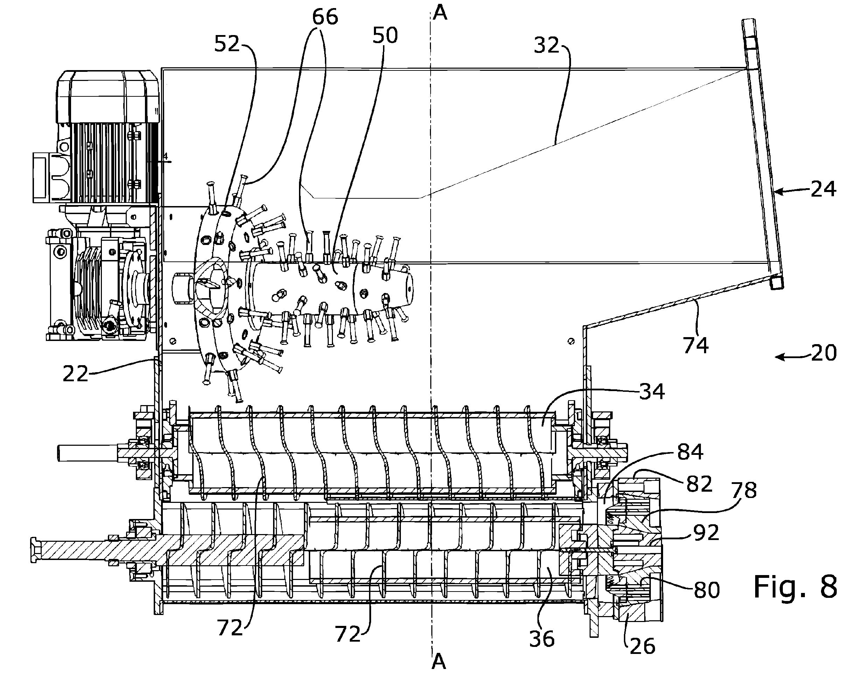

Die Ausführungsvariante der Vorrichtung 20 gemäß den Figuren 8 bis 11 unterscheidet sich in wenigen Details von den bereits beschriebenen Ausführungsvarianten. Ein wesentlicher Unterschied besteht darin, dass der Kegelfräser 50 oberhalb der Schneckenwendeln 34, 36 angeordnet ist. Der Kegelfräser 50 weist auf seinem Außenumfang verteilte längliche Zerkleinerungsmittel 66 auf, die vorzugsweise durch in den Kegelfräser 50 hinein geschraubte Schrauben gebildet sein können. Diese Schrauben stehen um etwa 1 bis 10 cm, vorzugsweise etwa 4 bis 6 cm gegenüber einer Oberfläche eines Grundkörpers 68 des Kegelfräsers vor. Der Kegelfräser 50 ist auch bei der Ausführungsvariante gemäß der Figuren 7 bis 11 vor einer Frässcheibe 52 angeordnet, die ebenfalls Zerkleinerungsmittel 66 aufweist. Eine Andrückplatte 32 ist ebenfalls vorgesehen.

Die Einwurföffnung 24 ist dem freien Ende des Kegelfräsers 50 gegenüberliegend angeordnet. Material, das durch die Einwurföffnung 24 in die Vorrichtung 20 geworfen wird, kommt zum Teil entweder zuerst mit den Schneckenwendeln 34, 36 in Kontakt, oder es trifft unmittelbar auf den Kegelfräser 50. Üblicherweise wird das auf die Schneckenwendeln 34, 36 auftreffende Material von diesem teilweise zerkleinert, teilweise aber auch nach oben in Richtung des Kegelfräsers 50 gedrückt. Die Andrückplatte hilft dabei, das Material in Richtung Kegelfräser 50 und Schneckenwendeln 34, 36 zu treiben. Am Kegelfräser 50 wird es dann erneut zerkleinert und wieder zurück in Richtung der Schneckenwendeln 34, 36 getrieben. Um den Zerkleinerungsvorgang weiter zu verbessern, kann vorteilhafterweise eine oszillierende Platte 70 vorgesehen sein, die das zu zerstörende Material immer wieder in Richtung der Schneckenwendeln 34,36 drückt. Die Platte 70 kann eine raue Oberfläche aufweisen, um selbst das Material zu zerkleinern oder um dieses besser in Richtung der Schneckenwendeln 34, 36 transportieren zu können. Eine solche oszilierende Platte 70 kann auch im Bereich des Kegelfräsers 50 angeordnet sein.

Die Kombination der Schneckenwendeln 34, 36, des Kegelfräsers 50 und der oszillierenden Platte 70 bewirkt einen automatischen Einzug des eingeworfenen Materials. Es ist nicht notwendig, dieses manuell von oben nachzudrücken, es wird von den sich bewegenden Bauteilen eingezogen und zerkleinert. Die oszillierende Platte 70 kann dabei vorzugsweise an der Antriebswelle der Einzugschneckenwendel 34 angelenkt sein und vom Motor der Einzugschneckenwendel 34 angetrieben werden.

Figur 8 verdeutlicht weiterhin, dass die Schneckenwendeln 34, 36 auf ihrer Außenseite gewindeförmig angeordnete Zerkleinerungskörper 72 aufweisen. Der Die Zerkleinerungskörper 72 können beispielsweise aus nebeneinander angeordneten Reißzähnen oder ähnliches gebildet sein. Es hat sich als besonders vorteilhaft erwiesen, wenn die Schneckenwendeln 34, 36 als im Wesentlichen geschlossene Körper ausgeführt sind, von denen die Zerkleinerungskörper 72 bzw. die Reißzähne nur um wenige Millimeter oder Zentimeter abstehen. Es hat sich gezeigt, dass ein Überstand von etwa 0,5 bis 2 cm vollkommen ausreichend ist und verhindert, dass sich Material zwischen die Gewindegänge der Zerkleinerungskörper 72 festsetzt. Dies kann zum Beispiel dadurch geschehen, dass relativ große Materialstücke durch die bewegten Bauteile in die Gewindegänge gedrückt werden.

Die Einwurföffnung 24 ist bei dieser Ausführungsvariante am Ende eines schräg in Richtung des Kegelfräsers 50 abfallenden zylindrischen Gehäusebauteils 74 angeordnet. Durch die Schräge wird bewirkt, dass sich das eingeworfene Material aufgrund der Schwerkraft in Richtung des Kegelfräsers 50 und der Schneckenwendeln 34, 26 bewegt.. Insgesamt kann es weiterhin vorteilhaft sein, wenn die gesamte Vorrichtung 20 in Richtung des Düsenkopfs 26 geneigt angeordnet ist, da dadurch eine sehr effektive Materialförderung erreicht wird.

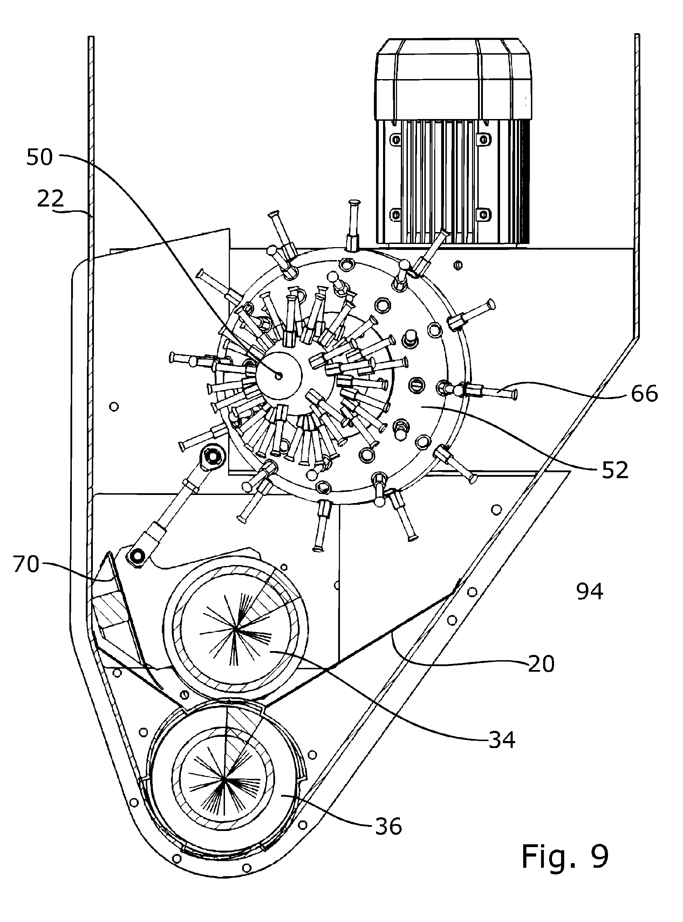

Figur 9 zeigt die Vorrichtung aus Figur 8 im Querschnitt. Erkennbar ist die Anlenkung der oszillierenden Platte 70 im Bereich der Einzugschneckenwendel 34. Die oszillierende Platte 70 ist über ein Verbindungsmittel 76 am Gehäuse 22 der Vorrichtung 20 befestigt. Sie ist außen mittig an der Antriebswelle der Einzugsschneckenwendel 34 befestigt und wird von dieser angetrieben. Erkennbar ist auch. Auf der anderen Seite der Einzugsschneckenwendel 34 ist ein Bodenblech 94 erkennbar, denkbar ist aber eine zweite oszillierende Platte 70.

Die Ausrichtung des Kegelfräsers 50 zu den Einzugsschneckenwendeln 34, 36 ist vorteilhafterweise veränderbar. Der Kegelfräser 50 kann sich im Wesentlichen parallel zu den Einzugsschneckenwendeln 34, 36 erstrecken, er kann aber auch schräg zu diesen angeordnet sein. Mit anderen Worten kann der Kegelfräser 50 nach oben, unten, rechts oder links verschwenkt werden. Das gleiche gilt für den Einzugsschneckenwendel 34, auch diese sind verschwenkbar gelagert, so dass unter anderem auch die Körnungsgröße des zerkleinerten Materials bestimmt werden kann. Je näher die Schneckenwendeln 34, 36 zueinander angeordnet sind, desto kleiner wird die Körnung des zerkleinerten Materials. Die Antriebswellen sämtlicher angetriebener Komponenten, insbesondere die des Kegelfräsers 50 können kardanisch aufgehängt sein.

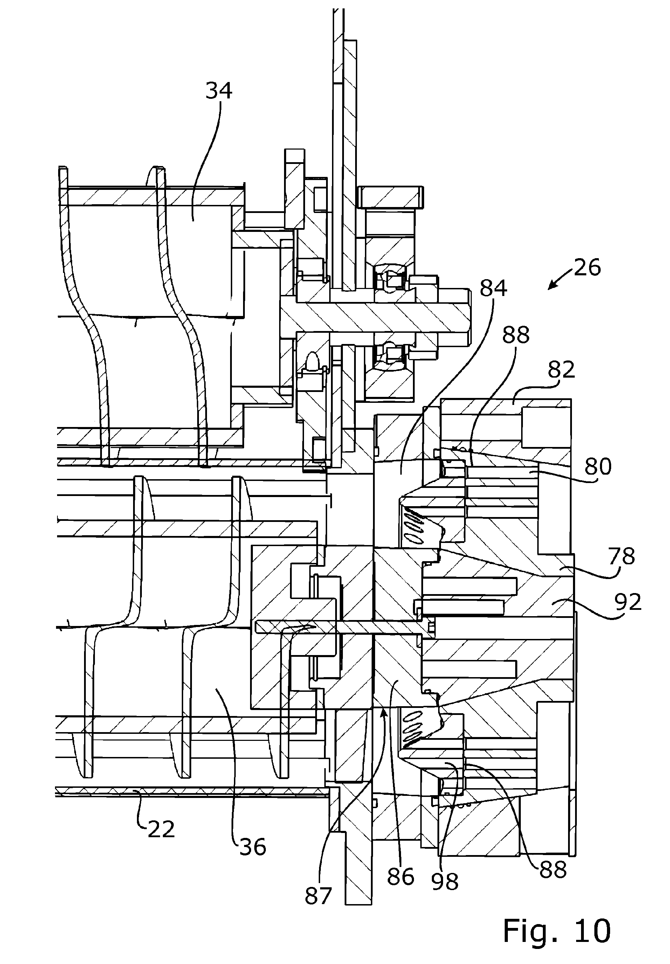

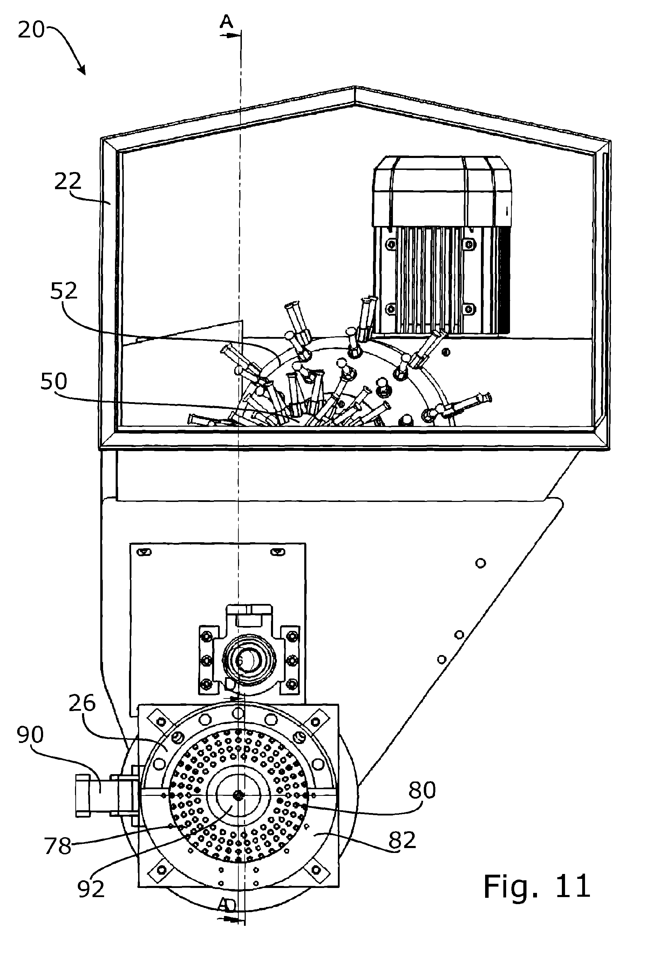

Die Figuren 10 und 11 verdeutlichen eine weitere Ausführungsvariante des Düsenkopfs 26. Dieser weist eine Lochscheibe 78 auf, durch deren Bohrungen 80 das aufgeschmolzene Material gepresst wird. Die Lochscheibe 78 bzw. der Düsenkopf 26 sind über ein Schwenklager 90 schwenkbar am Gehäuse 22 befestigt. Die Bohrungen 80 sind über dafür vorgesehene Entlüftungskanäle entlüftbar, die in einer Entgasungsscheibe 98 angeordnet sind. Dem aufgeschmolzenen Material können dadurch Gase entzogen werden. Die Entlüftungskanäle erstrecken sich ausgehend von den Bohrungen 80 in radialer Richtung und treffen auf einen umlaufenden Ringkanal, über den die Gase entweichen können. Vorzugsweise werden entstehende Gase durch Einstellen des Vakuums aktiv abgesaugt. Die Lochscheibe 78 ist von einem Heizring 82 umgeben, über den ausreichend Wärme zugeführt werden kann.

Die Zuführung des zerkleinerten Materials erfolgt nach dem "Fleischwolfprinzip" in Richtung des Düsenkopfs 26. Eine Materialkammer 84 vergrößert sich kegelförmig in Richtung der Lochscheibe 78 um ca. 8° im Außendurchmesser und um etwa 2° im Innenkegeldurchmesser 87 und begünstigt somit den Materialfluss des zerkleinerten Materials in Richtung des temperaturgeregelten Düsenkopfs 26.

Die Lochscheibe 78 bzw. der Düsenkopf 26 zentriert sich beim Einschwenken auf ein ebenfalls beheizbares Kegelstück 92, das sich in Richtung seines freien Endes verjüngt. Zwischen der Lochscheibe 78 bzw. dem Düsenkopf 26 und dem Gehäuse 22 der Vorrichtung 20 ist ein Sternlager 86 vorgesehen. Die Stromzuführung des Heizrings 82 kann durch ein mit Luft gekühltes Distanzstück erfolgen, wobei Stromkabel und Kühlluft durch Speichen des Sternlagers 86 nach außen geführt werden.

Das aufgebrochene und zerkleinerte Material gelangt also zunächst in die Materialkammer 84 und wird von dieser ausgehend in die Bohrungen 80 der Lochscheibe 78 hineingepresst. Die Bohrungen 80 weisen auf ihrer Länge jeweils eine Entspannungssenkung 88 auf, in der sich aufgeschmolzenes Material ausbreiten kann.

Figur 11 zeigt die Vorrichtung 20 von vorn, also mit Blick auf die Lochscheibe 78. Erkennbar ist das Schwenklager 90 zum Abklappen des Düsenkopfs 26.

Der Temperaturbereich des beheizbaren Düsenkopfs 26 ist stufenlos regelbar. Das beheizbare Kegelstück 92 und der Heizring 82 können getrennt voneinander geregelt und überwacht werden. Es hat sich gezeigt, dass eine Aufschmelztemperatur von etwa 180 bis 230° C zu guten Aufschmelzergebnissen führt. Zur Aufnahme der aufgeschmolzenen Masse eignen sich insbesondere beschichtete Behälter, an denen das aufgeschmolzene Material nicht haften bleibt.

Insgesamt baut die erfindungsgemäße Vorrichtung 20 sehr klein und kann problemlos auf einer Europalette (0,8 x 1,2 m) aufgestellt und verschraubt werden. Sie ist damit mobil einsetzbar und kann mit Hilfe eines normalen Pkw mit Anhänger oder einem kleinen LKW zum Einsatzort gebracht werden. Bei der Verwendung eines Generators ist es sogar möglich, Schaumstoffteile, beispielsweise auf einem Anhänger, zu zerkleinern und zu verflüssigen. Die Umdrehungsgeschwindigkeiten der Frässcheibe 52, des Kegelfräsers 50, der Schneckenwendeln 34, 36 und der Pressschnecke 46, wenn vorhanden, sowie die Temperaturzufuhr können vorzugsweise über eine SPS-Steuerung geregelt werden. Es hat sich gezeigt, dass eine Antriebsleistung von weniger als 10 KW ausreicht, um die gesamte Vorrichtung 20 zu betreiben. Sie ist somit sehr energieeffizient einsetzbar.

Die Erfindung ist nicht auf die beschriebenen Ausführungsbeispiele beschränkt, sondern umfasst vielmehr alle gleichwirkenden, in den Schutzumfang der Ansprüche fallenden Ausführungsformen. Insbesondere können Maßnahmen vorgesehen sein, die die Durchsatzgeschwindigkeit weiter erhöhen, aber trotzdem innerhalb des Schutzbereichs der Erfindung liegen.

## Patentansprüche

1. Vorrichtung (20) zum Verkleinern und Aufschmelzen von Schaumstoffteilen mit
- einer Einwurföffnung (24),
- einer Fördervorrichtung,
- einer Zerkleinerungsvorrichtung,
- einer Pressvorrichtung,
- einer Aufschmelzvorrichtung,
- einer Austrittsöffnung für aufgeschmolzenes Material,
**dadurch gekennzeichnet, dass**
die Fördervorrichtung und die Zerkleinerungsvorrichtung als nur eine Förder-Zerkleinerungsvorrichtung ausgeführt sind, in der die Schaumstoffteile während der Förderung zerkleinert werden.

2. Vorrichtung (20) nach Anspruch 1, **dadurch gekennzeichnet, dass** die Förder-Zerkleinerungsvorrichtung aus einer Einzugsschneckenwendel (34) und einer Vortriebsschneckenwendel (36) gebildet ist.

3. Vorrichtung (20) nach Anspruch 1 oder 2, **dadurch gekennzeichnet, dass** die Förder-Zerkleinerungsvorrichtung mit Sägezähnen bestückt ist.

4. Vorrichtung (20) nach Anspruch 2 oder 3, **dadurch gekennzeichnet, dass** die Einzugsschneckenwendel (34) in vertikaler Richtung oberhalb der Vortriebsschneckenwendel (36) angeordnet ist.

5. Vorrichtung (20) nach einem der Ansprüche 2 bis 4, **dadurch gekennzeichnet, dass** die Ausrichtung der Einzugsschneckenwendel (34) und der Vortriebsschneckenwendel (36) zueinander von im Wesentlichen parallel bis zu einem Öffnungswinkel von etwa 50°, insbesondere 20% einstellbar ist.

6. Vorrichtung (20) nach einem der Ansprüche 1 bis 5, **dadurch gekennzeichnet, dass** die Aufschmelzvorrichtung durch einen Düsenkopf (26) gebildet ist, der an eine Presszylindereinheit (42) anschließt, wobei zwischen dem Düsenkopf (26) und der Presszylindereinheit (42) ein thermisch gering leitendes Material angeordnet ist.

7. Vorrichtung (20) nach einem der Ansprüche 1 bis 6, **dadurch gekennzeichnet, dass** die ein Kegelfräser (50) vorgesehen ist, der bereits zerkleinertes Material in Richtung der Förder-Zerkleinerungsvorrichtung drückt.

8. Vorrichtung (20) nach einem der Ansprüche 1 bis 7, **dadurch gekennzeichnet, dass** eine Verdichtungsschnecke (63) vorgesehen ist, die das aufgeschmolzene Material weiter verdichtet.

9. Vorrichtung (20) nach einem der Ansprüche 1 bis 7, **dadurch gekennzeichnet, dass** das aufgeschmolzene Material in einen Brikettierungszylinder (28) gedrückt wird.
